# EUROPÄISCHE PATENTANMELDUNG

(11) **EP 4 102 204 A1**
(43) Veröffentlichungstag der Anmeldung: **14.12.2022**
(21) Anmeldenummer: 22152735.1
(22) Anmeldetag: 21.01.2022
(51) Int. Cl.: G01M 3/22

(54) **VERFAHREN ZUM DETEKTIEREN EINES LECKS IN EINEM FLUIDFÜHRENDEN ELEMENT EINER WÄRMETAUSCHVORRICHTUNG**

(30) Priorität: 11.06.2021 DE 102021115111
(71) Anmelder: Inficon GmbH, 50968 Köln (DE)
(72) Erfinder: SORIN, Jean-Michel, 49340 Nuaillé (FR)
(74) Vertreter: dompatent von Kreisler Selting Werner - Partnerschaft von Patent- und Rechtsanwälten mbB

(57) **Zusammenfassung**

Verfahren zum Detektieren eines Lecks in einem fluidführenden Element 16, 18 einer Wärmetauschvorrichtung 12, das die folgenden Schritte umfasst:
a) Erfassen einer Punktwolke 44 der Wärmetauschvorrichtung 12 in einem dreidimensionalen virtuellen Raum 48 unter Verwendung eines 3D-Sensors 34, wobei jeder der Punkte einen Oberflächenpunkt 46a auf der Außenfläche der Wärmetauschvorrichtung 12 darstellt,
b) Suchen innerhalb der Punktwolke 44 nach Strukturen 50, die Rohren mit einem vordefinierten Außendurchmesser entsprechen,
c) Durchsuchen der erhaltenen Strukturen 50 nach einem interessierenden Bereich 52, in dem sich der Durchmesser oder die Richtung des Rohrs ändert,
d) sobald ein interessierender Bereich 52 gefunden ist, Bestimmen eines Heranführwegs 58 zum Heranführen der Schnüffelsonde 22 eines Gasleckdetektors 24 an den interessierenden Bereich 52 innerhalb der Punktwolke 44, und
e) automatisches physisches Heranführen der Schnüffelsonde 22 an einen Prüfbereich 20 der Wärmetauschvorrichtung 12 entlang des Heranführwegs 58, wobei der Prüfbereich 20 dem interessierenden Bereich 52 innerhalb der Punktwolke 44 entspricht.

## Beschreibung

Die Erfindung betrifft einen Leckdetektor zur Detektion von Lecks an einem Prüfobjekt.

Ein Leckdetektor ist z.B. in DE 10 2005 022 156 A1 (Inficon) beschrieben. Dieser Leckdetektor umfasst eine Sonde, deren Sondenspitze an vorbestimmten Prüfregionen eines Prüfobjekts platziert wird. Das Prüfobjekt ist mit einem Prüfgas, z.B. Helium, gefüllt. Über die Sondenspitze wird austretendes Prüfgas von einer Basiseinheit angesaugt und einem Prüfgasdetektor zugeführt, der z.B. als Massenspektrometer ausgebildet sein kann.

Bei Verwendung von Leckdetektoren wird das Prüfobjekt, z.B. eine Klimaanlage oder das Kühlaggregat eines Kühlschranks, mit einem Prüfgas gefüllt, und es kann mit einer Schnüffelsonde detektiert werden, ob Prüfgas aus dem Prüfobjekt austritt. Bei einer Qualitätsprüfung von Produkten in der Industrie wird die Sondenspitze auf spezifische Prüfbereiche des Prüfobjekts aufgebracht, in denen in Möglichkeit besteht, dass ein Leck vorhanden ist. Dabei wird die Sonde manuell zu den Prüfbereichen bewegt. Bei diesem Prozess ist es schwierig, zu prüfen, ob die Sondenspitze zu sämtlichen relevanten Prüfbereichen der Prüfobjekte bewegt worden ist. Eine Bedienungsperson kann unbeabsichtigt bestimmte Prüfbereiche auslassen oder andere Prüfbereiche überspringen, die sie in ihrer subjektiven Beurteilung als unkritisch ansieht.

U.S.-Patent Nr. 4,945,305 (Ascension) beschreibt ein Positionsbestimmungssystem, das einen Sender zum Erzeugen eines gepulsten DC-Magnetfelds und einen Empfänger, der auf dem Objekt angeordnet ist, aufweist. Dieses Verfahren eignet sich besonders zum Bestimmen einer aktuellen Position, Vergleichen derselben mit einer gewünschten Position und für ein Feedback. Es wird keine Störung durch nichtmagnetische Objekte in der Sichtlinie zwischen dem Sender und dem Empfänger verursacht. Eine Reststörung durch große Massen von magnetisierbarem Material, wie z.B. einem Kompressorblock und einer Kühlmaschine, kann durch Kalibrieren eliminiert werden, da die zu prüfende Anordnung statisch ist. Dieses Verfahren hat sich als besonders sinnvoll für die Realisierung der Offenbarung herausgestellt.

WO 2009/016160 A1 beschreibt einen Leckdetektor, der eine Basiseinheit aufweist, die über ein Rohr mit einer Sonde verbunden ist. Die Sondenspitze wird auf Prüfzonen oder Prüfbereichen des Prüfobjekts platziert. In dem Fall, in dem Prüfgas aus dem Prüfobjekt austritt, wird dieses von einem Prüfgasdetektor in der Basiseinheit detektiert. Ein Positionsbestimmungssystem ist vorgesehen, das einen Sender, einen Empfänger, der in der Sonde angeordnet ist, und eine Zuführ- und Auswerteeinheit aufweist. Dadurch wird das Vorhandensein der Sondenspitze in den einzelnen Prüfbereichen überwacht und bestätigt.

Auf dem Gebiet der Automatisierung ist es bekannt, digitale Daten von physischen Objekten unter Verwendung eines 3D-Sensors zu erfassen, um dadurch eine Punktwolke in einem 3-dimensionalen virtuellen Raum zu erhalten, wobei die Punkte jeweils einen Oberflächenpunkt auf der Außenfläche des physischen Objekts darstellen. Roboter, die in der Automatisierungsindustrie verwendet werden, wie z.B. bei der automatisierten Herstellung von Produkten, wie z.B. Autos, werden von Software-Algorithmen gesteuert, bei denen die erfassten digitalen Daten verwendet werden. Dies erfolgt üblicherweise zum Sensieren des Außenumfangs oder von Flächen des gesamten physischen Objekts zum Lokalisieren, Ergreifen, Bewegen oder Umsetzen des Objekts oder zum Lackieren der Außenfläche des Objekts mittels eines Farbsprüh-Roboterarms, zum Beispiel in der Fahrzeugherstellungsindustrie.

Eine Schnüffel-Leckdetektion an Wärmetauschvorrichtungen, wie z.B. Kühlschränken, Klimaanlagen, Wärmepumpen etc., ist Teil der Qualitätsprüfung von Wärmetauschvorrichtungen. Eine menschliche Bedienungsperson muss die relevanten Prüfbereiche an dem Wärmetauscher, wie z.B. flüssigkeitsführenden Rohren, visuell identifizieren und die Sonde manuell nacheinander zu den Prüfbereichen bewegen. Diese Art der Schnüffel-Leckdetektion an Wärmetauschvorrichtungen ist zeitaufwendig und anfällig für Fehler, die durch den menschlichen Faktor verursacht werden, wie z.B. Auslassen von Prüfbereichen oder nicht ausreichendes Heranführen der Schnüffelsonde an einen Prüfbereich.

Der Erfindung liegt die Aufgabe zugrunde, eine zuverlässigere und schnellere Detektion eines Lecks in einem fluidführenden Element einer Wärmetauschvorrichtung zu schaffen.

Das erfindungsgemäße Verfahren ist durch die Merkmale des unabhängigen Anspruchs 1 definiert.

Entsprechend
a) wird eine Punktwolke in einem virtuellen 3-dimensionalen Raum aus der Wärmetauschvorrichtung unter Verwendung eines 3D-Sensors erhalten, wobei jeder der Punkte einen Oberflächenpunkt auf einer Außenfläche der Wärmetauschvorrichtung darstellt.
b) Nach dem Erhalten der Punktwolke wird die Punktwolke hinsichtlich Strukturen durchsucht, die Rohren mit einem vordefinierten Außendurchmesser entsprechen. Solche Rohre können fluidführenden Elementen der Wärmetauschvorrichtung entsprechen, in denen Lecks gesucht werden müssen.
c) In den gemäß b) erhaltenen Strukturen wird mindestens ein interessierender Bereich durchsucht, in dem sich der Durchmesser oder die Richtung des Rohrs ändert oder in dem ein Rohr endet, wie z.B. durch Vergrößerung des Durchmessers entsprechend einem Schweiß- oder Lötpunkt oder einer Schweiß- oder Lötstelle, einer Fügestelle oder einem Übergang zu einem weiteren Rohr, einem Verbindungsbereich, in dem das Rohr mit einem weiteren Rohr verbunden ist, wie z.B. durch Schweißen oder Löten, oder einem Ende eines Rohrs. Eine Richtungsänderung des Rohrs kann eine Biegung des Rohrs sein, an der sich die Richtung der Hauptlängsachse (Mittelachse) des Rohrs ändert. Eine Richtungsänderung des Rohrs kann auch eine Biegung in einer Außenwand des Rohrs sein. Diese interessierenden Bereiche stellen Schwachpunkte der durchsuchten fluidführenden Elemente dar und sind daher von besonderer Relevanz für die Schnüffel-Leckdetektion bei einer Qualitätsprüfung bei einem automatisierten Herstellungsprozesses einer Wärmetauschvorrichtung.
d) Sobald ein interessierender Bereich gefunden worden ist, wird mit dem erfindungsgemäßen Verfahren ein Heranführweg zum Heranführen der Schnüffelsonde eines Gasleckdetektors eines Gasleckdetektionssystem an den interessierenden Bereich innerhalb der Punktwolke bestimmt. Dies kann typischerweise durch Berechnen von mehreren Heranführwegen innerhalb der Punktwolke im virtuellen Raum durchgeführt werden, bevor die physische Schnüffelsonde tatsächlich an die Wärmetauschvorrichtung herangeführt wird.
e) Sobald ein Heranführweg bestimmt worden ist, wird die Schnüffelsonde physisch manuell entlang des Heranführweg an einen Prüfbereich der Wärmetauschvorrichtung herangeführt. Der Prüfbereich auf der physischen Wärmetauschvorrichtung entspricht dem zuvor ermittelten interessierenden Bereich innerhalb der Punktwolke.

Mit anderen Worten schafft die Erfindung das Erhalten eines virtuellen Modells oder eine Simulation zumindest eines Teils der Wärmetauschvorrichtung unter Verwendung eines 3D-Sensors, wobei das virtuelle Modell oder die Simulation hinsichtlich möglicher Leckagezonen (Prüfbereichen auf der physischen Wärmetauschvorrichtung), die jeweiligen interessierenden Bereichen des virtuellen Modells entsprechen, durchsucht wird. Bevor die Schnüffelsonde tatsächlich physisch an einen solchen Prüfbereich herangeführt wird, bietet die Erfindung das Bestimmen eines verwendbaren Heranführwegs unter Verwendung des virtuellen Modells statt der physischen Wärmetauschvorrichtung, um die Schnüffelsonde nur dann physisch an einen Prüfbereich heranzuführen, wenn ein Heranführweg zu dem jeweiligen interessierenden Bereich des virtuellen Modells gefunden worden ist.

Die Erfindung schafft somit eine zuverlässigere automatisierte und schnellere Schnüffel-Leckdetektion an fluidführenden Elementen von Wärmetauschvorrichtungen. Die fluidführenden Elemente sind häufig klein und innerhalb oder unterhalb der Außenumfangsfläche der Wärmetauschvorrichtung verborgen. Insbesondere haben unterschiedliche Typen von Wärmetauschvorrichtungen unterschiedliche Einbaustellen ihrer zu prüfenden fluidführenden Strukturen. Die Erfindung ermöglicht daher ein automatisches Durchsuchen unterschiedlicher Typen von Wärmetauschvorrichtungen auf eine zuverlässige und schnelle Weise.

Vorzugsweise wird ein Verfahren automatisch mittels eines Leckdetektionssystems durchgeführt, das den Gasleckdetektor und vorzugsweise einen Roboter aufweist.

Die Punktwolke in dem 3-dimensionalen virtuellen Raum wird vorzugsweise aus Bilddaten erzeugt, die von einer optischen Kamera, vorzugsweise mindestens zwei Kameras eines Bildgebungssystems, erhalten werden. Der 3D-Sensor kann ein Bildgebungssystem mit mindestens einer optischen Kamera und mindestens einer Beleuchtungsvorrichtung, wie z.B. einer LED oder einer Laserquelle, sein.

Im Anschluss an Schritt a) kann die Punktwolke mit digitalen Referenzwerten der Strukturen der Wärmetauschvorrichtung verglichen werden, die in der Punktwolke zu suchen sind. Dies kann zum Identifizieren und/oder Lokalisieren der Strukturen, wie z.B. eines Rahmens oder einer anderen Komponente der Wärmetauschvorrichtung, wie zum Beispiel eines Kompressors, erfolgen. Die digitalen Referenzdaten sind vorzugsweise zuvor erhaltene CAD-Daten der Wärmetauschvorrichtung. Die digitalen Referenzdaten können in einem Speicher des erfindungsgemäßen Leckdetektionssystems gespeichert werden.

Bei einer Ausführungsform kann mindestens ein Suchbereich innerhalb der Punktwolke auf der Basis des Vergleichs der Punktwolke mit den digitalen Referenzdaten ausgewählt oder erhalten werden. Der Suchbereich kann unter Verwendung von Positionsdaten der Position der Wärmetauschvorrichtung innerhalb der Punktwolke ermittelt werden, wobei die Positionsdaten durch Schritt b) erhalten werden können. Zum Beispiel kann, sobald die Strukturen, die einem Rohr mit einem vordefinierten Außendurchmesser entsprechen, durch Schritt b) erhalten worden sind, die Position solcher Strukturen erfasst und gespeichert werden. Diese Positionsdaten können zum Auswählen des Suchbereichs verwendet werden, in dem die ermittelten Strukturen oder Rohre hinsichtlich Durchmesseränderungen gesucht werden, um dadurch den interessierenden Bereich zu erhalten, in dem die Leckdetektion durchgeführt werden soll.

Die Referenzdaten können von dem 3D-Sensor des Leckdetektionssystems aus derselben Wärmetauschvorrichtung oder aus einer entsprechenden Vorrichtung des gleichen Typs erzeugt werden.

Schritt c) kann durch Verfolgen und Analysieren derjenigen Punkte innerhalb der Punktwolke, die dem in Schritt b) gefundenen Rohr entsprechen, durchgeführt werden.

Bei Schritt d) kann eine ideale Position der Schnüffelsonde für die Gasleckdetektion an dem Rohr oder einem Prüfbereich berechnet werden.

Schritt d) kann das Bestimmen umfassen, ob ein bestimmter Heranführweg zu einer Kollision der Schnüffelsonde mit Strukturen der Wärmetauschvorrichtung führt, und Schritt d) umfasst das Bestimmen eines weiteren Heranführwegs, wenn eine Kollision bei einem zuvor bestimmten Heranführweg erwartet wird.

Schritt d) kann wiederholt werden, bis ein Heranführweg bestimmt wird, bei dem keine Kollision der Schnüffelsonde mit Strukturen der Wärmetauschvorrichtung erwartet wird. Schritt d) kann zusätzlich oder alternativ das Verwenden von zuvor erhaltenen und gespeicherten digitalen Daten, wie z.B. CAD-Daten, der Schnüffelsonde und/oder eines Schritt e) durchführenden Roboters umfassen. Insbesondere kann zumindest Schritt e) von einem Roboter durchgeführt werden, der Teil des Leckdetektionssystems sein kann.

Mindestens einer der Schritte a) - d) kann von einem Software-Algorithmus eines Leckdetektionssystems durchgeführt werden, das einen Leckdetektor und vorzugsweise den oben genannten Roboter aufweist.

Schritt d) kann das Erzeugen einer Bewegungsbahn innerhalb der oder durch die Punktwolke in dem virtuellen Raum umfassen, wobei ein Roboter, der die Schnüffelsonde trägt, bei der Durchführung der eigentlichen Leckdetektion der Bewegungsbahn folgen soll.

Zumindest Schritte b) - d) können für mehrere interessierende Regionen wiederholt werden, und Schritt e) kann anschließend eine jeweilige Anzahl von Malen durchgeführt werden, um anschließend die Schnüffelsonde an jeweilige Prüfbereiche, die den interessierenden Bereichen entsprechen, heranzuführen.

Im Anschluss an Schritt e) kann mit dem erfindungsgemäßen Verfahren Schritt f) durchgeführt werden, bei dem die Schnüffelsonde in der Prüfregion schnüffelt, um eine Leckdetektion innerhalb des Prüfbereichs an dem Rohr durchzuführen, um ein mögliches Leck der fluidführenden Struktur zu identifizieren.

Die Schnüffelsonde kann eine generell U-förmige Schnüffelspitze mit zwei sich distal erstreckenden Schnüffelarmen aufweisen, wobei mindestens einer der Schnüffelarme eine Einlassöffnung aufweist. Eine solche U-förmige Schnüffelspitze wird an den Prüfbereich herangeführt, so dass die zwei Schnüffelspitzenarme auf gegenüberliegenden Seiten des zu prüfenden Rohrs positioniert sind.

Die Schnüffelsonde oder eine Schnüffelspitze der Schnüffelsonde kann automatisch rekonfiguriert, transformiert oder gegen eine andere Schnüffelsonde oder eine andere Schnüffelspitze ausgetauscht werden, sobald in Schritt d) bestimmt wird, dass ein Heranführweg zu einer Kollision der Schnüffelsonde mit einer Struktur der Wärmetauschvorrichtung führt.

Das erfindungsgemäße Verfahren kann bei einem neuen Typ von Wärmetauschvorrichtung dadurch angewendet werden, dass Informationen über den Ort mindestens eines interessierenden Bereichs und/über den Ort, an dem sich der Durchmesser oder die Richtung mindestens eines (weiteren) Rohrs ändert, über die innerhalb eines interessierenden Bereich zu suchende Richtung und/oder über den in Schritt b) zu suchenden vordefinierten Außendurchmesser bereitgestellt werden.

Im Folgenden werden Ausführungsformen der Erfindung mit Bezug auf die Zeichnungen genauer beschrieben. Es zeigen:
- Fig. 1: eine schematische Darstellung eines Leckdetektionssystems und einer Wärmetauschvorrichtung,
- Fig. 2: eine schematische Darstellung der Punktwolke im virtuellen Raum, die aus der Wärmetauschvorrichtung von Fig. 1 erfasst wird,
- Fig.: 3 eine schematische Darstellung eines Details einer weiteren Wärmetauschvorrichtung, und
- Fig. 4: eine schematische Darstellung der Punktwolke im virtuellen Raum, die aus der Wärmetauschvorrichtung von Fig. 3 erfasst wird.

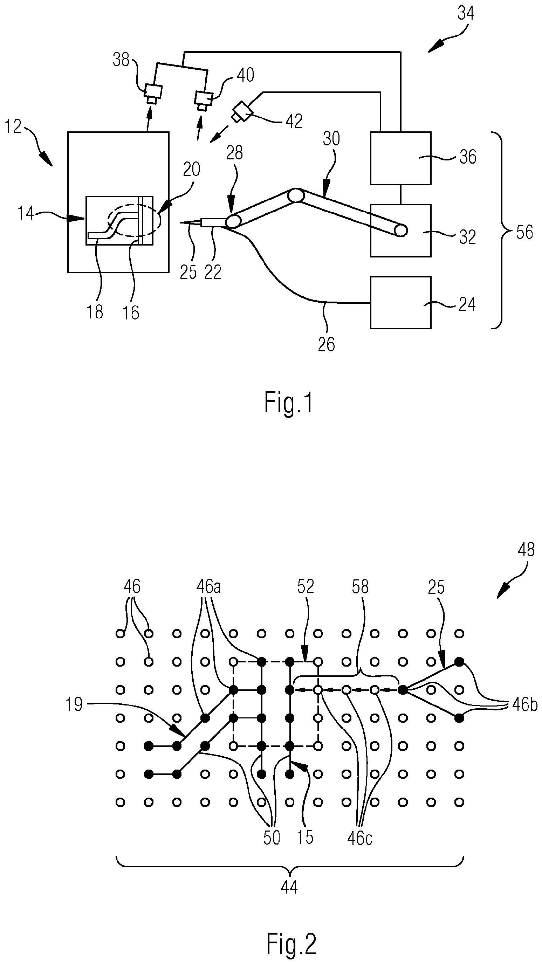

Fig. 1 zeigt eine Wärmetauschvorrichtung 12 in Form eines Kühlschranks. Der Ausdruck "Wärmetauschvorrichtung", wie er in der vorliegenden Offenbarung verwendet wird, bezieht sich auf Systeme oder Vorrichtungen, die einen Wärmetauscher, wie z.B. Kühlschränke, Klimaanlagen, Wärmepumpen etc., aufweisen. Die Wärmetauschvorrichtung weist auf ihrer unteren Rückseite 14 mehrere fluidführende Elemente 16, 18 in Form von Rohren auf, die während des Herstellungsprozesses auf der Rückseite des Kühlschranks angeschweißt werden. Als Teil einer vollautomatischen Qualitätskontrolle müssen besondere Prüfbereiche 20 zum Durchführen einer Leckdetektion in den Prüfbereichen 20 identifiziert werden. Ein Prüfbereich 20 wird als ein Bereich der Wärmetauschvorrichtung angesehen, in dem Rohre montiert, zusammengeschweißt oder zusammengelötet sind, in dem ein Rohr endet, in dem ein Rohr mit einem anderen Rohr verbunden ist oder in dem Rohre zusammengefügt sind oder einander kreuzen. Bei der in Fig. 1 gezeigten Ausführungsform ist ein erstes fluidführendes Element 16 vertikal angeordnet und ist ein zweites fluidführendes Element 18 mit einem seiner Enden mit dem ersten fluidführenden Element 16 verbunden. Der Bereich, in dem die Rohre 16, 18 verbunden sind, wird als Prüfbereich 20 angesehen und ist in Fig. 1 als gestrichelter Kreis gezeigt.

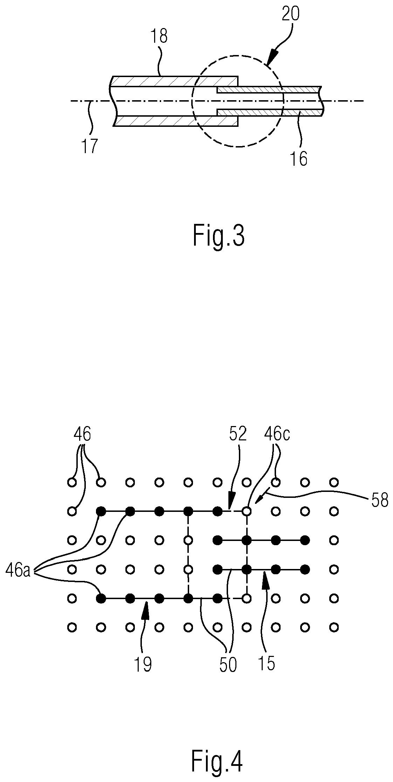

Ein noch typischeres Beispiel ist in Fign. 3 und 4 gezeigt, in denen zwei Rohre 16, 18 mit unterschiedlichem Durchmesser entlang einer gemeinsamen Längsachse 17 miteinander verbunden sind.

Das Ziel der Erfindung ist das automatische Bewegen einer Schnüffelsonde 22 eines Schnüffelleckdetektors 24 zu dem Prüfbereich 20, so dass die Schnüffelspitze 25 der Schnüffelsonde 22 nahe genug positioniert ist, um Gas anzusaugen, das aus einem möglichen Leck in einem der Rohre 16, 18 innerhalb des Prüfbereichs 20 austritt. Die Schnüffelsonde 22 ist über ein Verbindungsrohr 26 auf herkömmliche Weise mit dem Gasleckdetektor 24 verbunden.

Die Schnüffelsonde 22 ist an dem distalen Ende 28 eines Roboterarms 30 eines Roboters 32 montiert.

Ein 3D-Sensor 34 in Form eines Bildgebungssystems 36, das zwei optische Kameras 38, 40 und eine Beleuchtungsvorrichtung 42 in Form einer LED-Leuchte aufweist, erfasst digitale Bilddaten von der unteren Rückseite 14 der Wärmetauschvorrichtung 12. Die Beleuchtungsvorrichtung 42 beleuchtet auf allgemein bekannte Weise die Wärmetauschvorrichtung 12 und insbesondere die untere Rückseite 14 der Wärmetauschvorrichtung 12. Die Kameras 38, 40 erfassen das reflektierte Licht, und das Bilderzeugungssystem 36 erzeugt digitale Bilddaten, aus denen eine Punktwolke 44 in einem 3-dimensionalen virtuellen Raum 48 erfasst wird.

Fign. 2 und 4 zeigen vereinfachte reduzierte grafische Darstellungen der erfassten Punktwolke 44, die nur zu Veranschaulichungszwecken als auf eine 2-dimensionale Matrix reduziert gezeigt ist. Tatsächlich ist die von dem 3D-Sensor 34 erfasste Punktwolke 44 3-dimensional, wie z.B. in Form eines 3-dimensionalen Gitters oder Netzes. Mit anderen Worten weist jeder Punkt 46 der Punktwolke 44 drei Koordinaten x, y, z sowie einen Amplitudenwert auf, der zum Beispiel die Intensität der von den Kameras 38, 40 aufgenommenen reflektierten Beleuchtung darstellt.

Erfindungsgemäß wird die Punktwolke 44 nach Strukturen durchsucht, die Rohren mit einem vordefinierten Außendurchmesser entsprechen. Zum Beispiel können die Amplitudenwerte der Punkte 46 nach Werten innerhalb eines spezifischen Bereichs und innerhalb spezifischer Abstände hinsichtlich der geometrischen Struktur eines Rohrs mit einem vordefinierten Außendurchmesser, der dem Durchmesser der Rohre 16, 18 entspricht, durchsucht werden.

In Fign. 2 und 4 sind die Punkte der Wolke 44, die den Rohren 16, 18 entsprechen, mit Bezugszeichen 46a bezeichnet und sind durch ausgefüllte Kreise dargestellt, während andere Punkte 46 als leere Kreise dargestellt sind. Linien 50 verbinden die Punkte 46a und machen dadurch die Strukturen oder Darstellungen 15, 19 der Rohre 16, 18 der Wärmetauschvorrichtung 12 in dem virtuellen Raum 48 sichtbar.

Der Ausdruck "virtueller Raum" bezieht sich generell auf eine simulierte Umgebung der Wärmetauschvorrichtung 12, des Roboters 32, des Roboterarms 30 und der Schnüffelsonde 22 und den Raum zwischen der Sonde 22 und der Wärmetauschvorrichtung 12.

Als nächster Schritt werden bei dem erfindungsgemäßen Verfahren die erhaltene Struktur oder die Punkte 46 hinsichtlich Änderungen des Durchmessers durchsucht. Zum Beispiel ändert sich dann, wenn den Punkten 46a oder den Linien 50, die dem linken horizontalen Rohr 18 entsprechen, in Fig. 2 von links nach rechts gefolgt wird, der Durchmesser der Strukturdarstellung 19 des Rohrs 18 innerhalb des virtuellen Raums 48, wenn die Strukturdarstellung 19 des Rohrs 18 auf die Strukturdarstellung 15 des vertikalen Rohrs 16 trifft und mit dieser verbunden wird. Zum Beispiel kann dies durch Analysieren der Abstände zwischen Paaren von Punkten 46a und Vergleichen der Abstände mit den jeweiligen Abständen von weiteren Punkten 46a entlang der Linie 50 festgestellt werden. Die Punkte 46a der Strukturdarstellung 15 des vertikalen Rohrs 16 scheinen sich bei der Strukturdarstellung 19 des Rohrs 18 bei einer Analyse von links nach rechts im Durchmesser zu vergrößern.

Gleichermaßen vergrößern sich beim Analysieren der Strukturdarstellung 15 des vertikalen Rohrs 16 von oben nach unten Abstände zwischen Paaren von Punkten 46a in diesem Bereich, in dem die Strukturdarstellung 15 des vertikalen Rohrs 16 auf die Strukturdarstellung 19 des horizontalen Rohrs 18 trifft, was eine Vergrößerung des Durchmessers des Rohrs 16 zu sein scheint.

Der Bereich, in dem eine solche Vergrößerung des Durchmessers festgestellt wird, ist durch die gestrichelte Linie in Fign. 2 und 4 als interessierender Bereich 52 markiert. Dieser interessierende Bereich 52 wird in einem Speicher des Leckdetektionssystem 56 gespeichert, der innerhalb des Roboters 32 und/oder innerhalb des 3D-Sensors 36 oder alternativ innerhalb einer separaten Computervorrichtung, die mit dem Roboter 32 und/oder dem 3D-Sensor 36 verbunden ist, vorgesehen sein kann. Die Leckdetektionsvorrichtung 56 weist den Leckdetektor 24, den Roboter 32 und den 3D-Sensor 34 auf.

Der interessierende Bereich 52 in dem virtuellen Raum 48 entspricht dem Prüfbereich 20 der Wärmetauschvorrichtung 12, wobei die Schnüffelsonde 22 zur Leckdetektion an den Prüfbereich 12 herangeführt werden muss.

Als nächster Schritt muss ein Heranführweg 58 zum Heranführen der Schnüffelsonde an den Prüfbereich 20 und zum Heranführen einer grafischen Darstellung der Schnüffelsonde 22 in der Punktwolke 44 an den interessierenden Bereich 52 bestimmt werden. Dies erfolgt durch Verwenden von CAD-Daten der Schnüffelsonde 22 und ihrer Schnüffelspitze 25 und durch Vergleichen einer Punktwolke 44 mit den CAD-Daten. Dadurch können die Punkte 46b innerhalb der Punktwolke 44, die der Schnüffelspitze 25 oder der Schnüffelsonde 22 entsprechen, identifiziert werden. Danach wird ein Heranführweg 58 zum Heranführen der Schnüffelspitze 25 an den Prüfbereich 20 oder den interessierenden Bereich 52 innerhalb des virtuellen Raums 48 berechnet. Daher muss ein Heranführweg 58 bestimmt werden, auf dem eine Kollision der Schnüffelspitze 25, der Schnüffelsonde 22 und/ oder des Roboterarms 30 oder des Verbindungsrohrs 26 mit der Wärmetauschvorrichtung 12 oder anderen Strukturen oder Komponenten derselben vermieden wird. Dieser Heranführweg 58 ist durch die vier Pfeile und durch die Punkte 46c in Fig. 2 angezeigt.

Erst nach dem Bestimmen eines Heranführwegs 58, auf dem keine Kollision innerhalb des virtuellen Raums 48 oder der simulierten Umgebung erfolgt, wird die Schnüffelspitze 25 tatsächlich durch den Roboter 32 und den Roboterarm 30 an den realen Prüfbereich 20 in der realen Welt herangeführt.

Dadurch kann eine Leckdetektion in der Herstellungsindustrie und bei der Qualitätskontrolle vollautomatisch, viel schneller und viel zuverlässiger durchgeführt werden im Vergleich zu der von menschlichen Bedienungspersonen durchgeführten herkömmlichen Schnüffel-Leckdetektion an Wärmetauschvorrichtungen.

## Patentansprüche

1. Verfahren zum Detektieren eines Lecks in einem fluidführenden Element (16, 18) einer Wärmetauschvorrichtung (12), das die folgenden Schritte umfasst:
a) Erzeugen einer Punktwolke (44) der Wärmetauschvorrichtung (12) in einem dreidimensionalen virtuellen Raum (48) unter Verwendung eines 3D-Sensors (34), wobei jeder der Punkte einen Oberflächenpunkt (46a) auf der Außenfläche der Wärmetauschvorrichtung (12) darstellt,
b) Suchen innerhalb der Punktwolke (44) nach Strukturen (50), die Rohren mit einem vordefinierten Außendurchmesser entsprechen,
c) Durchsuchen der erhaltenen Strukturen (50) nach einem interessierenden Bereich (52), in dem sich der Durchmesser oder die Richtung des Rohrs ändert,
d) sobald ein interessierender Bereich (52) gefunden ist, Bestimmen eines Heranführwegs (58) zum Heranführen einer Schnüffelsonde (22) eines Gasleckdetektors (24) an den interessierenden Bereich (52) innerhalb der Punktwolke (44), und
e) automatisches physisches Heranführen der Schnüffelsonde (22) an einen Prüfbereich (20) der Wärmetauschvorrichtung (12) entlang des Heranführwegs (58), wobei der Prüfbereich (20) dem interessierenden Bereich (52) innerhalb der Punktwolke (44) entspricht.

2. Verfahren nach Anspruch 1, wobei das Verfahren von einem Leckdetektionssytem (56), das den Gasleckdetektor (24) aufweist, automatisch durchgeführt wird.

3. Verfahren nach Anspruch 1 oder 2, bei dem die Punktwolke (44) in dem dreidimensionalen virtuellen Raum (48) aus Bilddaten erzeugt wird, die aus mindestens zwei optischen Kameras (38, 40) eines Bildgebungssystems (36) erhalten werden.

4. Verfahren nach einem der vorhergehenden Ansprüche, bei dem der 3D-Sensor (34) ein Bildgebungssystem (36) mit mindestens einer optischen Kamera und mindestens einer Beleuchtungsvorrichtung (42) ist.

5. Verfahren nach einem der vorhergehenden Ansprüche, bei dem im Anschluss an Schritt a) die Punktwolke (44) mit digitalen Referenzdaten der innerhalb der Punktwolke (44) zu suchenden Strukturen der Wärmetauschvorrichtung (12) verglichen wird.

6. Verfahren nach Anspruch 5, bei dem die digitalen Referenzdaten zuvor erhaltene CAD-Daten der Wärmetauschvorrichtung (12) sind.

7. Verfahren nach Anspruch 5 oder 6, bei dem mindestens ein Suchbereich innerhalb der Punktwolke (44) auf der Basis des Vergleichs mit den Referenzdaten ausgewählt wird.

8. Verfahren nach einem der vorhergehenden Ansprüche, bei dem das Auswählen des Suchbereichs unter Verwendung von Positionsdaten der Position der Wärmetauschvorrichtung (12) innerhalb der Punktwolke (44), die durch Schritt b) erhalten werden, durchgeführt wird.

9. Verfahren nach einem der Ansprüche 5-8, bei dem die Referenzdaten von dem 3D-Sensor (34) aus derselben Wärmetauschvorrichtung (12) oder aus einer entsprechenden Wärmetauschvorrichtung (12) des gleichen Typs erzeugt werden.

10. Verfahren nach einem der vorhergehenden Ansprüche, bei dem Schritt c) durch Verfolgen und Analysieren derjenigen Punkte (46a) innerhalb der Punktwolke (44), die dem in Schritt b) gefundenen Rohr entsprechen, durchgeführt wird.

11. Verfahren nach einem der vorhergehenden Ansprüche, bei dem bei Schritt d) eine ideale Position der Schnüffelsonde (22) für die Gasleckdetektion an dem Rohr oder Prüfbereich (20) berechnet wird.

12. Verfahren nach einem der vorhergehenden Ansprüche, bei dem Schritt d) das Bestimmen umfasst, ob ein bestimmter Heranführweg (58) zu einer Kollision der Schnüffelsonde (22) mit Strukturen der Wärmetauschvorrichtung (12) führt, und das Bestimmen eines weiteren Heranführwegs (58), wenn eine Kollision bei einem zuvor bestimmten Heranführweg (58) erwartet wird, umfasst.

13. Verfahren nach einem der vorhergehenden Ansprüche, bei dem Schritt d) wiederholt wird, bis ein Heranführweg (58) bestimmt wird, bei dem keine Kollision der Schnüffelsonde (22) mit Strukturen der Wärmetauschvorrichtung (12) erwartet wird.

14. Verfahren nach einem der vorhergehenden Ansprüche, bei dem Schritt d) das Verwenden von zuvor erhaltenen und gespeicherten digitalen Daten, wie z.B. CAD-Daten, der Schnüffelsonde (22) und/oder eines Schritt e) durchführenden Roboters (32) umfasst.

15. Verfahren nach einem der vorhergehenden Ansprüche, bei dem zumindest Schritt e) von einem Roboter durchgeführt wird.

16. Verfahren nach einem der vorhergehenden Ansprüche, bei dem mindestens einer der Schritte a) - d) von einem Software-Algorithmus eines Leckdetektionssystems (56) durchgeführt wird, das einen Leckdetektor und einen Roboter aufweist.

17. Verfahren nach einem der vorhergehenden Ansprüche, bei dem Schritt d) das Erzeugen einer Bewegungsbahn (46c) umfasst, der ein Roboter (32), der die Schnüffelsonde (22) trägt, folgt.

18. Verfahren nach einem der vorhergehenden Ansprüche, bei dem zumindest Schritte b) - d) für mehrere interessierende Regionen wiederholt werden und Schritt e) anschließend eine jeweilige Anzahl von Malen durchgeführt wird, um anschließend die Schnüffelsonde (22) an jeweilige Prüfbereiche, die den interessierenden Bereichen entsprechen, heranzuführen.

19. Verfahren nach einem der vorhergehenden Ansprüche, bei dem im Anschluss an Schritt e) mit dem erfindungsgemäßen Verfahren durchgeführt wird
f) Abschnüffeln der Prüfregion mit der Schnüffelsonde (22) zum Durchführen einer Leckdetektion an dem Rohr innerhalb des Prüfbereichs (20) zum Identifizieren eines möglichen Lecks der fluidführenden Struktur (16, 18).

20. Verfahren nach einem der vorhergehenden Ansprüche, bei dem die Schnüffelsonde (22) eine im Wesentlichen U-förmige Schnüffelspitze mit zwei sich distal erstreckenden Schnüffelarmen aufweist.

21. Verfahren nach einem der vorhergehenden Ansprüche, bei dem die Schnüffelsonde (22) oder eine Schnüffelspitze der Schnüffelsonde (22) automatisch rekonfiguriert, transformiert oder gegen eine andere Schnüffelsonde (22) oder eine andere Schnüffelspitze ausgetauscht wird, sobald in Schritt d) bestimmt wird, dass ein Heranführweg (58) zu einer Kollision der Schnüffelsonde (22) mit Strukturen der Wärmetauschvorrichtung (12) führt.
